# EUROPEAN PATENT SPECIFICATION

(11) **EP 1 524 900 B1**
(45) Date of publication and mention of the grant of the patent: **18.07.2007**
(21) Application number: 03744894.1
(22) Date of filing: 13.03.2003
(51) Int. Cl.: A01N 25/10, A01N 25/08, A01N 59/16

(54) **MOLLUSCICIDE DELIVERY SYSTEM**
MOLLUSKIZID-ABGABESYSTEM
SYSTEME DE DISTRIBUTION MOLLUSCICIDE

(30) Priority: 25.03.2002 GB 0206970
(43) Date of publication of application: 27.04.2005
(73) Proprietor: Nu-Trel Products Ltd., Lincoln LN1 2LD (GB)
(72) Inventor: MCLAUCHLIN, Andrew, R., North Wales LL57 4AZ (GB)
(74) Representative: Hamilton, Alistair
(86) International application number: PCT/GB2003/001070
(87) International publication number: WO 2003/079781

## Description

### FIELD OF THE INVENTION

This invention relates to a delivery system for molluscicides, and more particularly to a delivery system in which metallic ions which are known to be lethal to molluscs are attached to plant fibres which are then used in various forms to deliver the active molluscicide material to molluscs.

### BACKGROUND OF THE INVENTION AND PRIOR ART

Various metal salts known to be active as molluscicides include:
- Ferric sulphate
- Ferric sodium EDTA
- Copper sulphate
- Aluminium sulphate
- Potassium aluminium sulphate.

These salts have clearly defined molluscicidal activity recorded in the literature. The environmental impact of each active is understood and catalogued and products based on the use of such metallic salts have been commercially available as contact molluscicides.

Examples of known molluscicidal products are disclosed for instance in WO-A-97/26789, WO-A-99/25194, WO-A-99/39576, GB-A-2207866 and EP-A-0725562.

In field conditions, the efficacy and activity of many metal salts is greatly attenuated by both dilution and the metal ions becoming chemically bound in the soil and being unavailable for toxic action. Proposed contact-action metal poisons such as aluminium tris(acetylacetonate) are expensive to manufacture and are therefore not economically feasible for use in the home garden or for horticulture or broad-acre application. Though metal salts are marketed as contact molluscicides and are indeed toxic, it is questionable whether they are cost-effective under field conditions

We have now found that impregnating metallic ions into plant fibres results in a material which is very effective in controlling the attack by molluscs such as slugs and snails on both seeds and growing crops. We believe this efficacy results from the metal ions being held on the fibres in a manner which prevents them being inactivated by contact with soil. We have also found that the presence of pectin either added to the plant fibres or already present as a material occurring naturally in the fibres not only enhances the activity of the metallic ions as molluscicides, but when the metallic ions are loaded onto the plant fibres, for example by soaking the plant fibres in an aqueous solution containing the metallic ions, the application also of pectin to the substrate substantially reduces the rate of leaching of the metallic ions by rain or surface water from the fibrous substrate. This increases the time the loaded fibrous substrate remains active in destroying molluscs.

### SUMMARY OF THE INVENTION

Accordingly, in a primary aspect of the invention there is provided a delivery system for controlling attack by molluscs, comprising a plant fibre substrate having applied thereto metallic ions of at least one metallic salt, the metallic ions being toxic to molluscs, wherein the substrate also incorporates pectin whereby retention of the metallic ions on the substrate is enhanced.

In other aspects of the invention there are provided: methods of making a delivery system according to the primary aspect of the invention; methods of deterring and/or destroying molluscs from a desired area comprising applying to the area a molluscicide delivery system according to the primary aspect of the invention; and the use of pectin for enhancing the retention of molluscicidal metallic ions in a plant fibre substrate of a molluscicide delivery system. These secondary aspects of the invention are as defined in the respective appended claims and as described by way of non-limiting embodiments and examples hereinbelow.

### DETAILED DESCRIPTION OF THE INVENTION AND PREFERRED EMBODIMENTS

The metal ions for use in the invention may be any that are known to have molluscicidal activity. Such metal ions will normally be used in the form of preferably a water soluble salt thereof. Thus, suitable metal salts for use in the invention include: ferric sulphate, ferric sodium EDTA, copper sulphate, aluminium sulphate and potassium aluminium sulphate. They may be used either singly or in combination.

In practical embodiments of the invention the metal ions are preferably applied to the substrate by spraying the plant fibre substrate with, or immersing it in, an aqueous solution of the metallic salt, preferably followed by a drying step.

The plant fibre substrate may take various forms. For example, long vegetable fibres, such as linen, jute or hemp, may be chopped and the chopped fibres formed into a non-woven mat. The mat may then be cut into eg. a substantially circular disc, preferably with a radial slit optionally leading to a central hole, so that when placed in the top of a pot containing a growing plant it covers the growing medium and fits around the stem of the plant.

Such plant fibres as linen, jute and hemp may alternatively be chopped to a size which enables them to be incorporated into pellets which can then be broadcast to protect growing areas from mollusc attack.

Delivery systems according to the invention may also be formed where the fibrous substrate is derived from waste plant materials such as sugar beet pulp. We have found that metallic ions can be readily loaded onto waste fibrous plant materials such as sugar beet pulp and the loaded material used as such or incorporated into pellets.

It is well known to pelletise sugar beet pulp and other similar sources of plant fibre to form feed pellets. United States Patent 4,034,120 describes the pelleting of beet pulp in a process where the pelleting is facilitated by the incorporation of a mixture of expanded vermiculite and/or finely divided vermiculite ore with an organic material which may be animal fat or a vegetable oil product such as cottonseed oil.

Sugar beet is available as so-called sugar beet shreds. We have found this material also to be useful in both deterring and destroying molluscs, particularly slugs, when metallic ions with molluscicidal activity are loaded eg. from solution onto the shreds, following which they are then dried. The resulting product can then be spread or broadcast in the same manner as pellets over an area where it is desired to control molluscs.

The composition by weight of solid sugar beet pulp may vary depending on the origin of the pulp and the cultivation conditions. In general, the pulp contains:
15% to 30% cellulose;
12% to 30% pectins;
12% to 30% hemicelluloses;
2% to 6% proteins;
2% to 6% mineral materials;
2% to 6% lignin, tannins, polyphenols and ferulic esters.

Sugar beet pulp is particularly useful for forming the fibrous substrate for use in the invention, we believe because of its ability to retain the metallic ions in an active position/state.

The shreds may also be reduced in size by milling to provide a powdery fibrous material which when loaded with metallic ions may be broadcast on the ground or spread or blown over plants to deter or destroy molluscs. It can also be used as the fibrous substrate to be incorporated into pellets.

Sugar beet pulp is one of a group of available vegetable pulps which also includes pulp derived from citrus fruits and fruits such as peaches, pears, apples, apricots, oleaginous plants such as sunflowers, legumes such as garden peas, the pulp being the material remaining after the primary desired product, such as sugar, fruit juice, pectin, oil, has been extracted therefrom by known means, e.g. by water-extraction. It may be necessary, when using as a source of fibrous material a material from which pectin has been extracted, to add pectin to it in the preparation of the substrate to ensure satisfactory performance of the finally loaded material.

Pectin is a group of complex anionic polysaccharides whose backbone consists primarily of blocks of 1-4 linked homogalacturonan interrupted by single 1-2 linked rhamnose units (BeMillar, J.N. 1986. in Fishman, M.L. and Jen, J.J., eds Chemistry and Functions of pectins. ACS Symposium Series, pp. 2-12). A small percentage of the pectin backbone contains regions of rhamnogalacturonans with ramnose side chains and xylogalacturonans in which xylose is the side chain (Renard et al.1998. Carbohydr. Res. Vol 305, pp271-280). The homogalaturonan blocks are copolymers of galacturonic acid and its methyl ester. In many naturally-occurring pectins 50% or more of the carboxyl groups are methyl-esterified. Pectin also contains the neutral sugars galactose and arabinose. These often occur as side chains linked to the rhamnogalacturonan portion of the pectin backbone.

In the preparation of delivery systems according to the invention the pectin is preferably incorporated in the substrate in a corresponding manner to the introduction of the metallic ions, ie. by either spraying the substrate with, or soaking it in, an aqueous pectin solution, either before, simultaneously with, or more preferably after the step of loading it with the metallic ions. Alternatively, if the plant fibres used to prepare the substrate contain by their nature and source a sufficient amount of pectin, then no separate pectin-introducing treatment step may be necessary.

We believe that one or more of the constituents of pectin may contribute to the activity of the delivery system in enhancing absorption of the metallic ions in the gut of the slug, as well enhancing the retention of the metallic ions on the fibrous substrate.

In certain applications, formulation of the delivery system of the invention as a pellet may be preferred. In other applications, however, any of the following alternative delivery regimes represent effective alternative preferred embodiments of the invention:
(1) in the case of plant-containing pots, using a pot cover made of a non-woven plant fibre mat loaded with metallic ions and which has been treated with pectin to increase the retention of the ions in the presence of rain or surface water.
(2) in broadcast applications, using plant waste shreds such as sugar beet shreds loaded with metallic ions.
(3) in broadcast applications using milled sugar beet shreds with a particle size of the order of about 2mm. The milled material can be loaded with metallic ions after milling has been carried out.

During trials, it has become clear that the delivery system of the invention is of particular value in preventing crop damage. It has been observed that as the level of application of the delivery system increases, there is a consequential reduction in crop damage. We also believe that this may be due in part to the induction of a level of anti-feedant activity in the molluscs, which may be due to a sub-clinical effect on the mollusc. This is supported by the substantial lack of crop damage which is observed without visible evidence of dead or moribund molluscs.

### EXAMPLES

The following examples illustrate but do not limit the invention.

### Example 1.

A means of protecting plants from slug attack is to impregnate non-woven mats with metallic ions. This is done by soaking the mats in a water solution of the desired metallic salt. The ion may then be fixed by spraying with a 1% aqueous solution of pectin which coagulates on contact with the metal ion. The mats are then shaped to fit around a plant by cutting out discs of ~16cm diameter with a radial slit cut to the centre, ie. so as to fit around a plant stem at ground level.

In trials to determine the effectiveness of such mats, field collected slugs of the species *Deroceras reticulatum* of known weight range were maintained in plastic boxes lined with moist filter paper and stored under controlled conditions. The slugs were fed a standard diet of potato tuber and starved for 24 hours prior to testing.

Split substrate tests were conducted according to the method of Bowen and Antoine (1995) on a series of non-woven mats. The fibres used in making the mats were hemp, linen and jute.

In split substrate trials, the non-woven mats were divided in half and one half treated with a solution of iron (iii) so as to load the mat with an average of 35mg/g with a standard error of 2mg/g, followed by spraying with a 1% solution of pectin. A single test slug was introduced for 24 hours. At the end of this period, the slug was removed and the surface of the mat dusted with activated charcoal. Once the excess was removed, this illustrated the movement of the slug over the test period.

From observations of the behaviour of the slug on the untreated portion of the mat, it was found that the type of fibre that was used to form the non-woven mat did not affect the behaviour of the slug.

To determine the effectiveness of the molluscicidal mats, a series of tests with different metallic ion sources was carried out with different sources of metallic ions, all of which were loaded on the fibrous substrates from aqueous solutions, pectin being only added with one source. Two mats were used loaded with each metallic ion source used, and five winter wheat seeds were placed in the centre of each mat. Five pre-starved slugs were introduced, the slugs having access to both mats. Five slugs are equivalent to a high level of pest infestation in the area occupied by the mats.

Mortality and crop protection were assessed at 24hr intervals over seven days when naive slugs were introduced.

This further supply of five slugs was introduced so as to carry on the tests for a further seven days on the same substrates.

The sources of metallic ions used were FeNaEDTA, FeNaEDTA/Pectin, Fe₂(SO₄)₃ and succinated Ca.

Analysis of Variance (ANOVA) showed a significant difference between the molluscicidal agent screened and the level of seed protection (P<0.001). Least Significant Difference (LSD) calculations demonstrated that application of the test compound, with the exception of succinated calcium, significantly increased crop protection over a period of 14 days.

However, with respect to levels of slug mortality, ANOVA demonstrated a significant difference between the test compound screened and the number of slug fatalities (P<0.001). LSD calculations subsequently illustrated that application of either FeNaEDTA, FeNaEDTA/Pectin, Fe₂(SO₄)₃ or succinated Ca to fibrous mats increased the level of slug mortality over a period of 14 days, when compared to the molluscicidal activity of the control.

The addition of pectin to the FeEDTA mats showed a significant increase in molluscicidal activity over the materials tested without pectin being present, 100% mortality being achieved over a period of 7 days.

### Example 2.

Trials were carried out of the plant fibre carrier material prepared by milling sugar beet pulp (containing pectin) to give a material with a particle size <2mm. This material was then soaked in solutions of ferric or ferrous sulphates and dried to give varying levels of active material. Table 1 below shows the materials prepared for these trials.

**Table 1**

| **Sample** | **Ion** | **Loading in mg/g beet** |
|---|---|---|
| T | Iron (ii) | 20 |
| U | Iron (ii) | 10 |
| V | Iron (iii) | 5 |
| W | Iron (iii) | 10 |

The loaded milled sugar beet shreds were tested in trials where they were delivered as a broadcast application using terraria lined with unbleached blotting paper.

Trays (0.0715m²) were lined with unbleached moist blotting paper, and seeds were sown at agricultural rates (350 seeds/m²). There were five replicates for each of the following treatments:
1. Control (Seeds only)
2. Draza (Methiocarb slug pellets, ex Bayer) at 0.039325g for 0.0715m² - equivalent to 5.5 Kg/ha
3. T at twice the conc. of Methiocarb - 0.07865g for 0.0715m²
4. U at twice the conc. of Methiocarb - 0.07865g for 0.0715m²
5. V at twice the conc. of Methiocarb - 0.07865g for 0.0715m²
6. W at twice the conc. of Methiocarb - 0.07865g for 0.0715m²

Due to preliminary findings, test pellets were applied at twice the concentration of Methiocarb. This was because previous work on metallic ion molluscicides had suggested that levels of the order of 12 % active ingredient were required to emulate the performance of Methiocarb in laboratory trials.

Four slugs (D. *reticulatum,* starved for 24h) were then added to each tray and placed in an environmentally controlled room (12h light:dark regime 15°C, 90% humidity). The trays were observed on a daily basis over a period of seven days for hollowing of seeds and slug mortality. Dead slugs were removed to prevent infection. After one week the slugs and seeds were replaced and the trays observed for a further seven days.

At the end of the trial, any remaining slugs were placed into observation boxes and mortality recorded for a further seven days.

The results obtained with these samples T, U, V and W were similar to that with the commercially available material Draza. Compound W was effective until day 5. However, compound U reduced slug feeding until day 6 of the trial. Similar trends were apparent between days 8 to 14.

### Example 3.

Trials were carried out to demonstrate the effectiveness as a molluscicide delivery system of pectin-containing sugar beet shreds which had been soaked in iron(ii) or iron(iii) solutions and then dried.

Solutions containing iron ions were made up to contain:
- iron (iii) sulphate (5000ppm and 10000ppm with respect to iron)
- iron (ii) sulphate (10000ppm and 20000ppm with respect to iron)
- ammonium iron (iii) sulphate.(10000ppm and 20000ppm with respect to iron)

Using 1 litre of solution per 1000g beet shreds gave the following levels of active (Iron ion as Fe(ii) or Fe(iii)):
- iron (iii) sulphate: 0.5% and 1.0% w/w
- iron (ii) sulphate: 1.0% and 2.0% w/w
- ammonium iron (iii) sulphate: 1.0% and 2.0% w/w

Tests were carried out using broadcast application in terraria lined with peat soil.

Peat soil (approx. 2cm deep) was used as the terraria lining (0.0715m2) and seeds were sown at agricultural rates (350 seeds/m2). There were five replicates for each of the following treatments:
1. Control 1 (Seeds only),
2. Draza pellets (Methiocarb at 0.039325g per 0.0715m2 - equivalent to 5.5Kg/ha). All the rest were sugar beet shreds loaded with the iron salt and applied at twice the concentration of Methiocarb (0.07865g per 0.0715m2):
3. Ammonium iron (iii) sulphate (2%)
4. Ammonium iron (iii) sulphate (1%)
5. Iron (iii) sulphate (1%)
6. Iron (iii) sulphate (0.5%)
7. Iron (ii) sulphate (2%)
8. Iron (ii) sulphate (1%).

The percentages indicate the weight % of the iron in the treated pellet.

The samples being tested were added to a moist peat soil base and slugs introduced only when they had softened and were more palatable. Four slugs (D. *reliculatum,* starved for 24h) were then added to each tray and placed in an environmentally controlled room (12h light:dark regime 15°C, 90% humidity). The trays were observed on a daily basis over a period of seven days for hollowing of seeds and slug mortality. Dead slugs were removed. After one week the slugs and seeds were replaced and the trays observed for a further seven days. At the end of the trial, any remaining slugs were placed into observation boxes and mortality recorded for a further seven days.

### Crop Protection

Draza delivered significant crop protection up to day seven of the trial. Between days 8 and 14 Draza gave little crop protection and the test sample iron (iii) sulphate (10ppm) gave very good crop protection.

### Slug Mortality

During the first seven days of the trial, the test sample iron (ii) sulphate gave the most promising result, inducing the highest slug mortality.

Draza and iron (iii) sulphate (10ppm) also gave less but significant levels of slug mortality.

Between 8 and 14 days test samples ammonium iron (iii) sulphate (20ppm) and iron (iii) sulphate (10ppm) yielded the highest slug mortality. Draza showed surprisingly low slug mortality between 8 and 14 days.

### Example 4

The elution of ferric ion from non-woven mats, one of which had been treated with ferric sulphate and the other with chelated (EDTA) iron followed by a 1% pectin solution, were compared to see whether chelated iron conferred any further advantage in increasing the retention of iron in the presence of water.

In each case the non-woven mat disc (9cm diameter) was packed into a glass chromatography column fitted with a PTFE tap connected to a peristaltic pump. Deionised water was passed through the column at a rate of 1.05ml/min. Samples were collected every 20 minutes, filtered and analysed for Fe.

The flow rate was calculated to be equivalent to 2.6mm rainfall per minute. 100 ml of flow was equivalent to 248mm rain.

The results are shown in Table 2 below. In each case, the concentration of eluted ion fell by several orders of magnitude. The greatest decrease was obtained with **Iron EDTA/Pectin** treatment (7 orders) and the eluted iron concentration from the **Iron sulphate/Pectin** treated pot top fell by 4 orders of magnitude.

**Table 2**

| **Treatment** | **Initial Loading mg/g** | **Initial Wt g** | **Final Wt g** | **Total leached, mg** |
|---|---|---|---|---|
| **Fe Sulphate/Pectin** | 46.3 | 4.00 | 3.60 | 110.7 |
| **Fe EDTA/Pectin** | 50.2 | 5.52 | 3.98 | 273.5 |

### Example 5

A typical commercial farinaceous pellet formulation embodying the present invention is as follows:

| **Constituent** | **Function** | **Wt%** |
|---|---|---|
| Fine Wheatfeed | Food base | 60 |
| Agricultural gypsum | Binder | 28 |
| Calcium hydroxide | Attractant | 7 |
| Benzoic acid | Preservative | 1 |
| Sodium hydroxide | Acidity modifier | 0.016 |
| Spray dried yeast | Feeding stimulant | 2 |
| Bromophenol blue | Bird repellent | 0.15 |
| Active ingredient | Molluscicidal agent | 1 |

In order to examine the feasibility of pelletising sugar beet shreds, trials were carried out using a range of devised blends as shown in Table 3 below, from which strands were produced on a pilot scale using 16mm and 24mm twin screw extruders.

**Table 3**

| **Pellet Formulations** | | | | | | | | | | |
|---|---|---|---|---|---|---|---|---|---|---|
| | Option | D | E | F | G | H | I | J | K | L |
| | Label | SBPB | SBP2 | SBPI | BRNB | BRN2 | BRNI | FICSBPI | FICSBP2 | FUSSBP1 |
| | Fine Wheatfeed | | | | | | | | | |
| | Sugar Beet Shreds | 60 | 60 | 60 | | | | | | |
| | Bran | | | | 60 | 60 | 60 | | | |
| | Impregnated Sugar Beet Shreds | | | | | | | 60 | 60 | 60 |
| | Agric. Gypsum | 28 | 28 | 28 | 28 | 28 | 28 | 28 | 28 | 28 |
| | PVA | 0 | 0 | 0 | 0 | 0 | 0 | 0 | 0 | 0 |
| Snail Attractant | Calcium Hydroxide | 7 | 7 | 7 | 7 | 7 | 7 | 7 | 7 | 7 |
| | | | | | | | | | | |
| Preservative | Benzoic Acid | 1 | 1 | 1 | 1 | 1 | 1 | 1 | 1 | 1 |
| | | | | | | | | | | |
| Acidity regulator | Sodium Hydroxide | 0.016 | 0.016 | 0.016 | 0.016 | 0.016 | 0.016 | 0.016 | 0.016 | 0.016 |
| | | | | | | | | | | |
| Attractant | Spray Dried Yeast | 2 | 2 | 2 | 2 | 2 | 2 | 2 | 2 | 2 |
| Bird repellent | Bromophenol Blue | 0.15 | 0.15 | 0.15 | 0.15 | 0.15 | 0.15 | 0.15 | 0.15 | 0.15 |
| | | | | | | | | | | |
| Active | Iron (iii) Sulphate | 0 | 2 | 1 | 0 | 2 | 1 | 0 | 0 | 0 |
| Active | Pectin | 0 | 2 | 1 | 0 | 2 | 1 | 0 | 0 | 0 |
| Active | Iron (ii) Sulphate | 0 | 0 | 0 | 0 | 0 | 0 | 0 | 0 | 0 |
| | | | | | | | | | | |
| | **Total** | **98.2** | **102.2** | **100.2** | **98.2** | **102.2** | **100.2** | **98.2** | **98.2** | **98.2** |

### Effect of metal ion-containing pellets and loaded milled sugar beet shreds when delivered as a broadcast application using terraria lined with unbleached blotting paper

Trays (0.0715m²) were lined with unbleached moist blotting paper, and seeds sown at agricultural rates (350 seeds/m²). There were five replicates for each of the following treatments:
1. Control (Seeds only)
2. Draza slug pellets at 0.039325g for 0.0715m² - equivalent to 5.5Kg/ha
3. Option D at twice the conc. of Methiocarb - 0.07865g for 0.0715m²
4. Option E at twice the conc. of Methiocarb - 0.07865g for 0.0715m²
5. Option F at twice the conc. of Methiocarb - 0.07865g for 0.0715m²
6. Option G at twice the conc. of Methiocarb - 0.07865g for 0.0715m²
7. Option H at twice the conc. of Methiocarb - 0.07865g for 0.0715m²
8. Option I at twice the conc. of Methiocarb - 0.07865g for 0.0715m²
9. Option M at twice the conc. of Methiocarb - 0.07865g for 0.0715m²
10. Option T at twice the conc. of Methiocarb - 0.07865g for 0.0715m²
11. Option U at twice the conc. of Methiocarb - 0.07865g for 0.0715m²
12. Option W at twice the conc. of Methiocarb - 0.07865g for 0.0715m²

Four slugs (D. *reliculatum,* starved for 24h) were then added to each tray and placed in an environmentally controlled room (12h light:dark regime 15°C, 90% humidity). The trays were observed on a daily basis over a period of seven days for hollowing of seeds and slug mortality. Dead slugs were removed to prevent infection. After one week the slugs and seeds were replaced and the trays observed for a further seven days. At the end of the trial, any remaining slugs were placed into observation boxes and mortality recorded for a further seven days.

### Crop Protection

The commercial product Draza (Methiocarb) and test pellets D induced crop protection until day 4 of the trial, after which the level of feeding damage increased. Between days 8 and 14 there was little evidence of any crop protection with similar levels of damage noted in untreated control areas.

### Mortality

During the first seven days of the trial, only Draza and option E were seen to induce significant levels of slug mortality. However, option E was shown to deteriorate over time as by day 14 of the trial, only Draza pellets were shown to still induce slug mortality.

The results obtained with these samples T, U, V and W were similar to that with the commercially available material Draza. Compound W was effective until day 5. However, compound U reduced slug feeding until day 6 of the trial. Similar trends were apparent between days 8 to 14.

### Example 6

This example illustrates the use of a pellet made according to the following formulation:

| Ingredient | wt% |
|---|---|
| Fine Wheatfeed | 54.6 |
| Sugar Beet Shreds | 25.42 |
| Agric. Gypsum | 4.54 |
| Calcium Hydroxide | 6.35 |
| Benzoic Acid | 0.91 |
| Sodium Hydroxide | 0.01 |
| Starch | 0.91 |
| Spray dried Yeast | 1.82 |
| Bromophenol Blue | 0.14 |
| Ferric Sulphate | 1.82 |
| Pectin | 1.82 |
| Ferrous Sulphate | 1.82 |

These pellets contain both ferric and ferrous ions and were evaluated in both controlled laboratory and semi-field trials to assess the efficacy of the pellet in terms of levels of crop protection afforded when used in a barrier mode and compared to the commercially available Methiocarb pellets applied broadcast in the laboratory evaluation and as a barrier in the semi-field trials.

### Methodology:

*Laboratory evaluation* - Trials were conducted in mini terraria (300 mm x 200 mm), lined with moist, unbleached, absorbent paper, and containing winter wheat seeds applied at approximate agricultural rates. Four pre-starved *D. reticulatum* slugs were introduced to each terraria and maintained in a controlled environment chamber (12 hour light:dark, 15°C, 90% humidity). Treatments comprised:
- Untreated control
- Methiocarb pellets (pbi, 4% a.i.)
- Test pellets applied as a barrier

The Methiocarb pellets were delivered at a rate equivalent to 5.5 Kg/ha, with each treatment containing at least five replicates. Trials were performed over a period of 10 days with daily recordings obtained in the form of the number of dead or severely affected slugs and the number of hollowed seeds. Any dead or severely affected slugs were removed from the terraria to prevent infection. The test pellet was delivered as a barrier application, in which seeds were grouped into three groups of eight and surrounded by a complete ring (approximately 1 cm diameter), of test pellet.

*Semi-field evaluation* - In order to assess the efficacy of the test pellet under more realistic field conditions, complementary caged arena trials were performed. Caged arena trials were performed in 1 m² hardwood arenas, with rigid pvc foam core side panels (200 mm high). Side panels were coated with Fluon (polytetrafluoroethylene) to prevent slugs from escaping. Enclosures were lined with medium loam composting soil, to a depth of approximately 5-6 cm, and contained four young lettuce seedlings. Organic lettuce seedlings (cultivar "all year round") were grown from seed in glasshouses and transplanted into cages when they had 4-6 true leaves. Methiocarb pellets were delivered to arenas in such a way to ensure an even distribution and at a rate equivalent to 5.5 Kg/ha. Treatments comprised:
- Untreated control
- Methiocarb pellets
- Test pellets
with each treatment containing five replicates. The test pellets and Methiocarb pellets were applied as a barrier application, in which each individual lettuce was surrounded with 1 cm diameter of formulated pellet.

Fifteen slugs (species *Deroceras reticulatum*), were introduced into each arena and the top covered with chicken mesh to prevent damage from scavenging birds. Tests were performed over a period of 14 days with recordings obtained on a daily basis. Slug mortality was measured by recording the number of dead or severely affected slugs on the soil surface or in the crop. Signs of slugs being severely affected included compact shape, excess slime formation, immobility, convulsive head movements and those lying on their side. Crop protection was measured by calculating the percent leaf damage sustained to each lettuce. Any signs of phytotoxicity were also noted in the form of discolouration, necrosis or deformations.

### Results:

### 1. Laboratory Evaluation:

The test was found to induce a high level of crop protection consistently throughout the trial as a barrier application.

The results clearly showed that when delivered as a barrier application, approximately 10% feeding damage was recorded after a period of 10 days. Methiocarb when delivered as a broadcast application was initially active and produced crop protection. This activity, however, was short-lived and by day 10 of the trial did not suppress slug feeding activity and the level of crop damage was equivalent to that of the control.

### 2 Semi-Field Trials

This trial was only carried out for seven days due to the unusually adverse weather conditions which caused disintegration of the pellets, allowing access by slugs to the lettuce plants. However, in the initial seven days of the trial, both Methiocarb and the test pellet applied as a barrier application suppressed plant damage to levels below that of the control.

## Claims

1. A molluscicide delivery system for controlling attack by molluscs, comprising a plant fibre substrate having applied thereto metallic ions of at least one metallic salt, the metallic ions being toxic to molluscs, wherein the substrate also incorporates pectin.

2. A delivery system according to claim 1, wherein the at least one metallic salt is water soluble.

3. A delivery system according to claim 1 or claim 2, wherein the metallic salt is selected from one or more of the following: ferric sulphate, ferric sodium EDTA, copper sulphate, aluminium sulphate and potassium aluminium sulphate.

4. A delivery system according to any one of claims 1 to 3, wherein the metallic ions are applied to the substrate by spraying it with, or immersing it in, an aqueous solution of the metallic salt, optionally followed by a drying step.

5. A delivery system according to any preceding claim, wherein the substrate comprises chopped plant fibres formed into a non-woven mat.

6. A delivery system according to claim 5, wherein the non-woven mat is cut into a substantially circular disc with a radial slit therein.

7. A delivery system according to any one of claims 1 to 4, wherein the substrate comprises chopped, and optionally milled, plant fibres formed into a pellet.

8. A delivery system according to any one of claims 1 to 4, wherein the substrate comprises chopped plant fibres milled to form a powder.

9. A delivery system according to any preceding claim, wherein the substrate is formed from sugar beet pulp or sugar beet shreds.

10. A delivery system according to any preceding claim, wherein the substrate is formed from pulp derived from any of the following: citrus fruits, peaches, pears, apples, apricots, oleaginous plants, legumes.

11. A delivery system according to any preceding claim, wherein the pectin is introduced into the substrate in a discrete pectin-introducing preparative step.

12. A delivery system according to any one of claims 1 to 10, wherein the substrate material naturally contains the pectin by virtue of its nature and source.

13. A method of making a delivery system for controlling attack by molluscs, comprising applying to a plant fibre substrate metallic ions of at least one metallic salt, the metallic ions being toxic to molluscs, and, if the substrate does not already contain pectin, also applying pectin to the substrate.

14. A method according to claim 13, wherein the metallic ions are applied to the substrate by spraying it with, or immersing it in, an aqueous solution of the metallic salt, optionally followed by a drying step.

15. A method according claim 13 or claim 14, wherein the pectin is introduced into the substrate by spraying it with, or immersing it in, a pectin-containing solution.

16. A method of deterring and/or destroying molluscs from a desired area, comprising applying to the area a molluscicide delivery system according to any one of claims 1 to 12.

17. Use, as a molluscicidal agent, of metallic ions which are toxic to molluscs in combination with pectin.

18. Use of pectin for enhancing the retention of molluscicidal metallic ions in a plant fibre substrate of a molluscicide delivery system.

## Patentansprüche

1. Ein Molluskizid-Abgabesystem zur Kontrolle von Schneckenbefall, das ein Pflanzenfasersubstrat umfasst, auf welches metallische Ionen von zumindest einem metallischen Salz angewendet wurden, wobei die metallischen Ionen für Mollusken giftig sind, wobei das Substrat auch Pektin enthält.

2. Ein Abgabesystem nach Anspruch 1, wobei das zumindest eine metallische Salz wasserlöslich ist.

3. Ein Abgabesystem nach Anspruch 1 oder 2, wobei das metallische Salz aus einem oder mehreren der folgenden Verbindungen ausgewählt ist: Eisensulfat, Eisennatrium-EDTA, Kupfersulfat, Aluminiumsulfat und Kaliumaluminiumsulfat.

4. Ein Abgabesystem nach einem der Ansprüche 1 bis 3, wobei die metallischen Ionen auf das Substrat angewendet werden, indem es damit besprüht wird, oder indem es in eine wässerige Lösung des metallischen Salzes getaucht wird, optional von einen Trocknungsschritt gefolgt.

5. Ein Abgabesystem nach einem der vorhergehenden Ansprüche, wobei das Substrat zerhackte Pflanzenfasern, die in einem nicht gewebten Vlies gebildet sind, umfasst.

6. Ein Abgabesystem nach Anspruch 5, wobei das nicht gewebte Vlies zu einer im Wesentlichen kreisförmigen Scheibe mit einem radialen Schlitz darin geschnitten wird.

7. Ein Abgabesystem nach einem der Ansprüche 1 bis 4, wobei das Substrat zerhackte, und optional gemahlene, Pflanzenfasern, die in einem Pellet gebildet sind, umfasst.

8. Ein Abgabesystem nach einem der Ansprüche 1 bis 4, wobei das Substrat zerhackte Pflanzenfasern, die zu Pulver gemahlen wurden, umfasst.

9. Ein Abgabesystem nach einem der vorhergehenden Ansprüche, wobei das Substrat aus Zuckerrübenpulpe oder aus Zuckerrübenschrot gebildet ist.

10. Ein Abgabesystem nach einem der vorhergehenden Ansprüche, wobei das Substrat aus Pulpe gebildet ist, die aus der folgenden Gruppe stammt: Zitrusfrüchte, Pfirsiche, Birnen, Äpfel, Aprikosen, Ölpflanzen, Gemüse.

11. Ein Abgabesystem nach einem der vorhergehenden Ansprüche, wobei das Pektin in einem getrennten vorbereitenden Pektin-Einführungs-Schritt in das Substrat eingeführt wird.

12. Ein Abgabesystem nach einem der Ansprüche 1 bis 10, wobei das Substratmaterial naturgemäß das Pektin enthält, aufgrund seiner Natur und Herkunft.

13. Ein Verfahren zur Herstellung eines Abgabesystems zur Kontrolle von Schneckenbefall, das die Anwendung von metallischen Ionen von zumindest einem metallischen Salz auf ein Pflanzenfasersubstrat umfasst, wobei die metallischen Ionen für Mollusken giftig sind, und, falls das Substrat nicht schon Pektin enthält, auch die Anwendung von Pektin auf das Substrat.

14. Ein Verfahren nach Anspruch 13, wobei die metallischen Ionen auf das Substrat angewendet werden, indem es damit besprüht wird, oder indem es in eine wässerige Lösung des metallischen Salzes getaucht wird, optional von einen Trocknungsschritt gefolgt.

15. Ein Verfahren nach Anspruch 13 oder Anspruch 14, wobei das Pektin in das Substrat eingeführt wird, indem es damit besprüht wird, oder indem es in eine Pektin enthaltende Lösung getaucht wird.

16. Ein Verfahren zur Fernhaltung und/oder zur Vertilgung von Mollusken von einem gewünschten Bereich, das die Anwendung eines Molluskizid-Abgabesystems nach einem der Ansprüche 1 bis 12 auf diesen Bereich umfasst.

17. Verwendung von metallischen Ionen, die in Kombination mit Pektin für Mollusken giftig sind, als molluskizider Wirkstoff.

18. Verwendung von Pektin zur Verbesserung der Retention der molluskiziden metallischen Ionen in einem Pflanzenfasersubstrat eines Molluskizid-Abgabesystems.

## Revendications

1. Un système de libération de molluscide pour contrôler les attaques de mollusques, comprenant un substrat de fibre de plante sur lequel sont appliqués des ions métalliques d'au moins un sel métallique, les ions métalliques étant toxiques pour les mollusques, dans lequel le substrat comprend aussi de la pectine.

2. Un système de libération selon la revendication 1, dans lequel le au moins un sel métallique est soluble dans l'eau.

3. Un système de libération selon la revendication 1 ou la revendication 2, dans lequel le sel métallique est choisi dans un ou plusieurs des produits suivants : sulfate ferrique, EDTA sodium ferrique, sulfate de cuivre, sulfate d'aluminium et sulfate de potassium et d'aluminium.

4. Un système de libération selon l'une quelconque des revendications 1 à 3, dans lequel les ions métalliques sont appliqués sur le substrat par sa pulvérisation avec, ou son immersion dans, une solution aqueuse du sel métallique, éventuellement suivie d'une étape de déshydratation.

5. Un système de libération selon l'une quelconque des revendications précédentes, dans lequel le substrat comprend des fibres de plante hachées formées dans un tapis non tissé.

6. Un système de libération selon la revendication 5, dans lequel le tapis non tissé est coupé en un disque substantiellement circulaire qui présente une fente radiale.

7. Un système de libération selon l'une quelconque des revendications 1 à 4, dans lequel le substrat comprend des fibres de plante hachées, et éventuellement moulues, formées dans une pastille.

8. Un système de libération selon l'une quelconque des revendications 1 à 4, dans lequel le substrat comprend des fibres de plante hachées moulues pour former une poudre.

9. Un système de libération selon l'une quelconque des revendications précédentes, dans lequel le substrat est formé à partir de pulpe de betterave à sucre ou de betterave à sucre râpée.

10. Un système de libération selon l'une quelconque des revendications précédentes, dans lequel le substrat est formé à partir de pulpe dérivée de n'importe laquelle des denrées suivantes : agrumes, pêches, poires, pommes, abricots, plantes oléagineuses, légumes.

11. Un système de libération selon l'une quelconque des revendications précédentes, dans lequel la pectine est introduite dans le substrat lors d'une étape préparatoire d'introduction distincte.

12. Un système de libération selon l'une quelconque des revendications 1 à 10, dans lequel le matériau du substrat contient naturellement la pectine en vertu de sa nature et de son origine.

13. Un procédé pour fabriquer un système de libération afin de contrôler les attaques de mollusques, comprenant l'application, sur un substrat de fibre de plante, d'ions métalliques d'au moins un sel métallique, les ions métalliques étant toxiques pour les mollusques, et, si le substrat ne contient pas encore de pectine, également l'application de pectine sur le substrat.

14. Un procédé selon la revendication 13, dans lequel les ions métalliques sont appliqués sur le substrat par sa pulvérisation avec, ou son immersion dans, une solution aqueuse du sel métallique, éventuellement suivie d'une étape de déshydratation.

15. Un procédé selon la revendication 13 ou la revendication 14, dans lequel la pectine est introduite dans le substrat par sa pulvérisation avec, ou son immersion dans, une solution contenant de la pectine.

16. Un procédé pour dissuader et/ou exterminer les mollusques dans la zone que l'on souhaite, comprenant l'application dans cette zone d'un système de libération de molluscide selon l'une quelconque des revendications 1 à 12.

17. Utilisation, comme agent molluscicide, d'ions métalliques qui sont toxiques pour les mollusques en combinaison avec de la pectine.

18. Utilisation de pectine pour améliorer la rétention des ions métalliques molluscicides dans un substrat de fibre de plante d'un système de libération de molluscide.
